# EUROPÄISCHE PATENTANMELDUNG

(11) **EP 2 022 308 A1**
(43) Veröffentlichungstag der Anmeldung: **11.02.2009**
(21) Anmeldenummer: 08009125.9
(22) Anmeldetag: 16.05.2008
(51) Int. Cl.: A01C 7/08

(54) **Pneumatische Verteilmaschine**

(30) Priorität: 03.08.2007 DE 102007036661
(71) Anmelder: Amazonen-Werke H. Dreyer GmbH & Co. KG, 49205 Hasbergen-Gaste (DE)
(72) Erfinder: Brüggemann, Klaus, 27777 Ganderkesee (DE); Hoffmann, Karl-Peter, 27798 Hude (DE)

(57) **Zusammenfassung**

Pneumatische Verteilmaschine mit einem Vorratsbehälter, Dosiereinrichtung, pneumatisch beaufschlagter und zu einem Verteilerkopf führender Förderleitung mit einem Einspeiseöffnung und Injektordüsen aufweisenden Injektor, wobei über die Einspeiseöffnung des Injektors das auszubringende Material von der Dosiereinrichtung in die Förderleitung eingespeist wird, wobei der Injektor in der der Einspeiseöffnung gegenüberliegenden Wandung eine von einem Verschlusselement abdeckbare Durchleitungsöffnung für das beim Abdrehvorgang dosierte Material aufweist. Um mit einfachen Maßnahmen Abdrehfehler während des Abdrehens der Maschine in einfacher Weise zu vermeiden, ist vorgesehen, dass oberhalb der Injektordüsen für den Abdrehvorgang ein dachähnliches Leitelement in dem Injektor anordbar ist, und zwar derart, dass zwischen dem dachähnlichen Element und den inneren Seitenwänden des Injektors zumindest eine Durchflussöffnung von der Einspeiseöffnung zu der Durchleitungsöffnung vorhanden ist.

## Beschreibung

Die Erfindung betrifft eine pneumatische Verteilmaschine gemäß des Oberbegriffes des Patentanspruches 1.

Eine derartige pneumatische Verteilmaschine ist beispielsweise in der DE 10 2005 061 091 A1 beschrieben. Um eine große Förderleistung zu erreichen, ragt die Düse von oben gesehen in den Zulaufbereich des Materials von der Dosiereinrichtung zu der Einspeiseöffnung des Injektors hinein. Hierdurch entsteht das Problem, dass beim Abdrehen der Dosiervorrichtung der pneumatischen Verteilmaschinen, wenn bei abgeschalteter Gebläseluft und geöffneter Durchleitungsöffnung des Injektors das Material durch den Injektor hindurch in einen Auffangbehälter geleitet wird, Material sowohl in die Düse wie auch in die Expansionsdüse des Injektors gelangen können. Hierdurch entstehen Abdrehfehler.

Der Erfindung liegt die Aufgabe zugrunde, mit einfachen Maßnahmen Abdrehfehler während des Abdrehens der Maschine in einfacher Weise zu vermeiden.

Diese Aufgabe wird erfindungsgemäß dadurch gelöst, dass oberhalb der Injektordüsen für den Abdrehvorgang ein dachähnliches Leitelement in dem Injektor anordbar ist, und zwar derart, dass zwischen dem dachähnlichen Element und den inneren Seitenwänden des Injektors zumindest eine Durchflussöffnung von der Einspeiseöffnung zu der Durchleitungsöffnung vorhanden ist. Infolge dieser Maßnahmen wird durch das oberhalb der Injektordüsen angeordnete dachähnliche Leitelement verhindert, das Material beim Abdrehen in die Düse bzw. die Expansionsdüse fallen kann. Vielmehr wird das Material durch die zwischen dem dachähnlichen Element und den inneren Seitenwänden des Injektors verbleibende Durchflussöffnung das Material an den Öffnungsbereich der Düsen vorbeigeleitet.

Um eine wirksame Abdeckung zur Vermeidung, dass Material in die Öffnungen der Düse und Injektionsdüse gelangt und ein wirksames Vorbeileiten an diesen Öffnungen der Düse auch in ungünstigen Fällen sicherzustellen, ist vorgesehen, dass das Leitelement sich in Längsrichtung über die gesamte Einspeiseöffnung des Injektors erstreckt.

In einer Ausführung ist vorgesehen, dass das Leitelement in Längsrichtung des Injektors zwischen einer Abdeckstellung und einer Freigabestellung verschiebbar am oder im Injektor angeordnet ist. Hierbei kann das Leitelement zwischen der Außenwandung des Injektors und der Injektordüse verschiebbar angeordnet sein.

In einer anderen Ausführungsform ist vorgesehen, dass das Injektorgehäuse und die Injektordüsen einen kreisförmigen Querschnitt aufweisen, dass zumindest eine der Injektordüsen um die Längsachse des Injektors drehbar im Injektorgehäuse angeordnet ist, dass an der drehbar angeordneten Injektordüse das Leitelement angeordnet ist. Bei einer derartigen Ausgestaltung kann das Leitelement in integrierter Weise in den Injektor der drehbar angeordneten Injektordüse angeordnet sein. Hierdurch wird eine sehr einfache Ausgestaltung und Anordnung des Leitelementes erreicht. Das Leitelement kann dann einerseits die Durchflussöffnung abdecken und in der anderen Stellung als dachförmiges Leitelement in erfindungsgemäßer Weise dienen. Dieses lässt sich dadurch in einfacher Weise verwirklichen, dass die Injektordüse mit dem Leitelement um etwa 180° zwischen einer Abdeckstellung und einer Freigabestellung verdrehbar ist, dass in der Abdeckstellung das Leitelement sich im Bereich der Einspeiseöffnung befindet und in der die Eingabeöffnung freigebenden Freigabesteller die Durchflussöffnung abdeckt.

Um jeweils eine definierte und sichere Anordnung des Leitelementes in der jeweiligen Stellung zu gewährleisten, ist vorgesehen, dass das Leitelement mittels eines Verriegelungselementes in der jeweiligen Stellung festsetzbar ist.

Weitere Einzelheiten der Erfindung sind der Beispielsbeschreibung und den Zeichnungen zu entnehmen. Hierbei zeigen
- Fig. 1: den Injektor in perspektivischer Darstellung mit sich in Außerbetriebsstellung befindlichem dachförmigen Leitelement,
- Fig. 2: den Injektor nach Fig. 1 im Schnitt,
- Fig. 3: den Injektor im Schnitt III - III,
- Fig. 4: den Injektor mit in Abdrehstellung eingeschobenem dachförmigen Leitelement in perspektivischer Darstellung,
- Fig. 5: den Injektor gemäß Fig. 4 im Längsschnitt,
- Fig. 6: den Injektor im Schnitt VI - VI,
- Fig. 7: einen anders ausgestalteten Injektor mit sich in Außerbetriebsstellung befindlichem dachförmigen Leitelement in perspektivischer Darstellung,
- Fig. 8: den Injektor gemäß Fig. 7 im Längsschnitt,
- Fig. 9: den Injektor im Schnitt IX - IX,
- Fig. 10: den Injektor gemäß Fig. 7 jedoch mit sich in Abdrehstellung befindlichen dachförmigen Leitelement in perspektivischer Darstellung,
- Fig. 11: den Injektor gemäß Fig. 10 im Längsschnitt und
- Fig. 12: den Injektor im Schnitt XII - XII.

Der Injektor 1 ist unterhalb einer beispielsweise als Zellenrad ausgebildeten Dosiervorrichtung angeordnet. Diese Dosiervorrichtung ist an dem Vorratsbehälter einer pneumatischen Verteilmaschine angeschlossen. Der Injektor ist innerhalb einer von einem Gebläse pneumatisch beaufschlagten Förderleitung, die zu einem Verteilerkopf der pneumatischen Verteilmaschine führt, angeordnet. Von diesem Verteilerkopf aus führen Saatleitungen zu Ausbringelementen der pneumatischen Verteilmaschine.

Über die Schleuse 2 des Injektors 1 wird das von der Dosiervorrichtung dosierten Material in die Förderleitung eingespeist. Der Injektor 1 weist die mit einem Einlauftrichter 3 zusammenwirkende Einspeiseöffnung 4, die Düse 5, sowie die Expansionsdüse 6 auf. Der Injektor 1 wird in Pfeilrichtung 7 von der Luftströmung durchströmt. In dem unteren Bereich unterhalb der Einspeiseöffnung 4 des Injektors 1, über welche das Material von der Dosiervorrichtung in die Förderleitung eingespeist wird, ist die von dem Verschlusselement 8 abgedeckte Durchleitungsöffnung 9 für das beim Abdrehvorgang dosierte Material angeordnet.

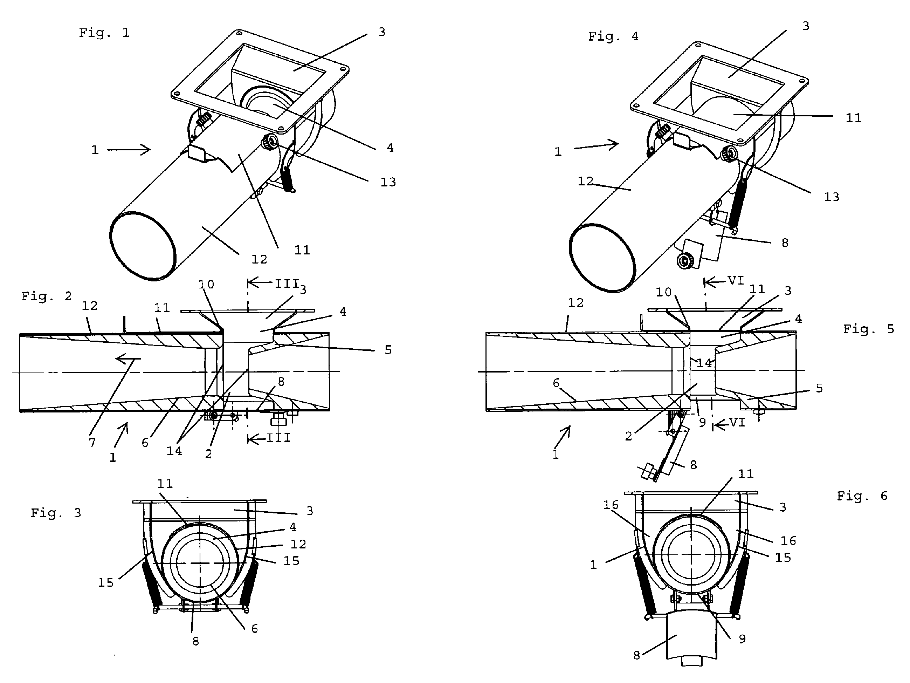

In der Gehäusewandung des Einlauftrichters 3 der Einspeiseöffnung 4 des Injektors 1 ist ein Schlitz 10 zum Einschieben eines dachähnlichen Leitelementes 11 in den Einlauftrichter 3 des Injektors 1 oberhalb der Einspeiseöffnung 4. Dieses dachförmige Leitelement 11 ist an die rohrförmigen Ausgestaltung des Außengehäuses 12 des Injektors 1 angepasst ausgebildet. Während des normalen Ausbringvorganges. Weiterhin befindet sich das dachförmige Leitelement 11 in der aus dem Einlauftrichter 3 des Injektors 1 herausgezogenen Stellung und ist mittels der als Schrauben 13 ausgebildeten Verriegelungselemente in dieser Position festgesetzt. Unterhalb der Einspeiseöffnung 5 ist in dem Gehäuse des Injektors 1 die Durchleitungsöffnung 9, die durch das Abdeckelement 8 verschlossen, wie die Fig. 1 bis 3 zeigen.

Wenn der Abdrehvorgang durchgeführt werden soll, wird zunächst das Gebläse abgeschaltet, damit kein Luftstrom durch die Förderleitung und den Injektor 1 strömt. Weiterhin wird das Abdeckelement 8 gelöst und nach unten geschwenkt, so dass die Durchleitungsöffnung 9 freigegeben wird. Unterhalb der Durchleitungsöffnung 9 des Injektors 1 wird ein Auffangbehälter angeordnet, um das während des Abdrehvorgangs dosierte Material auffangen zu können. Weiterhin wird nach dem Lösen der Schrauben 13 das dachförmige Leitelement 11 in den Injektorbereich hineingeschoben und zwar oberhalb der Einspeiseöffnung 4 in den Einlauftrichter 3, wie dies die Fig. 4 bis 6 zeigen. Hierbei ist das dachförmige Leitelement 3 derart in der Breite ausgestaltet, dass es in Draufsicht gesehen einerseits zwar die Öffnungen 14 der Einlassdüse 5 und der Expansionsdüse 6 abdeckt, aber andererseits zwischen dem Leitelement 11 in der Abdeckstellung und den inneren Seitenwänden 15 des Injektors 1 jeweils seitlich eine Durchflussöffnung 16 von der Einspeiseöffnung 4 zu der Durchleitungsöffnung 16 vorhanden ist. Durch diese Durchflussöffnungen kann das Material, welches von der Dosiervorrichtung aus dem Vorratsbehälter in Richtung des Injektors 1 dosiert wird, von dem dachförmigen Leitelement 11 durch den Injektor 1 an den Öffnung 14 der Düsen 5 und 6 vorbeigeleitet und durch die Durchleitungsöffnung 9 in den Auffangbehälter fließen.

Nach Beendigung des Abdrehvorganges wird das dachförmige Leitelement 11 wieder aus dem Injektor 1 in die in den Fig. 1 bis 3 dargestellte Position gezogen und hier mittels der Schrauben 13 in dieser Position verriegelt.

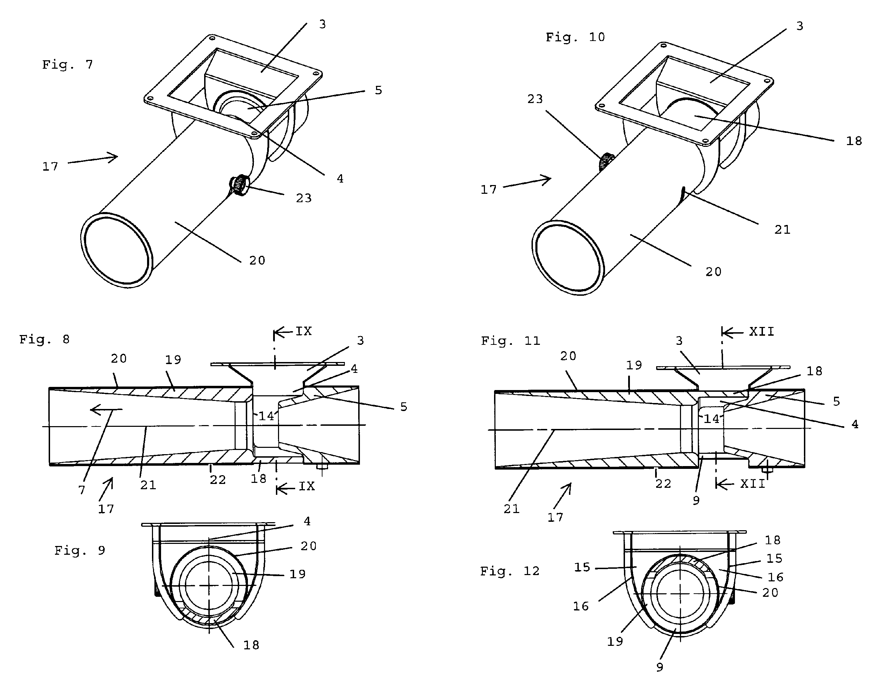

Der Injektor 1 gemäß den Fig. 7 bis 12 unterscheidet sich von dem Injektor 17 gemäß den Fig. 1 bis 6 durch eine andere Anordnung und Ausgestaltung des dachförmigen Leitelementes 18 sowie des Abdeckelementes für die Durchleitungsöffnung 9.

Bei diesem Injektor 17 ist die Expansionsdüse 19 in dem kreisförmigen Teil des Rohrabschnittes 20 des Injektors 17 drehbar angeordnet. Die Expansionsdüse 19 ist um die Längsachse 21 des kreisförmigen Querschnittes mittels des an ihm angeordneten und durch einen Schlitz 22 in der Gehäusewandung 20 des Injektors 17 ragenden und als Schraubelement 23 ausgebildeten Verriegelungselement verdrehbar und in der jeweiligen Stellung festsetzbar.

An der drehbar angeordneten Expansionsdüse 19 des Injektors 17 ist das dachähnliche Leitelement 18 angeordnet. Das dachförmige Leitelement 18 ist mittels der drehbar angeordneten als Expansionsdüse 19 ausgebildeten Injektordüse verdrehbar. Während des normalen Ausbringvorganges, wenn über die Einlassöffnung 4 und den Einlauftrichter 3 von dem Dosierorgan das auszubringende Material über den Injektor 17 in die Förderleitung eingespeist wird, befindet sich das dachförmige Leitelement 18 im unteren Bereich des Injektors 17 und deckt hierbei die Durchflussöffnung 9 ab, wie die Fig. 7 bis 9 zeigen. Mittels des Verriegelungselementes 23 ist die Expansionsdüse 19 mit dem Leitelement 18 in dieser Position verriegelt.

Wenn der Abdrehvorgang durchgeführt werden soll und der pneumatische Luftstrom, der in Durchflussrichtung 7 den Injektor 17 während des Ausbringvorganges durchströmt, abgeschaltet ist, wird nach Lösen der als Schraube 23 ausgebildeten Verriegelungselement die Injektordüse 19 mit dem dachähnlichen Leitelement 18 um etwa 180° verdreht, so dass dann das Leitelement sich oberhalb der Öffnungen 14 der Injektordüsen 5 und 19 befindet. In dieser Position wird dann die Injektordüse 19 mit dem dachähnlichen Leitelement 18 festgesetzt. In Draufsicht gesehen deckt das Leitelement 18 die Öffnungen 14 der Düsen 5 und 19 ab, so dass sie im Schatten liegen. Hierbei weist das Leitelement 18 eine derartige Breite auf, dass zwischen dem dachähnlichen Element 18 und den inneren Seitenwänden 15 des Injektors 17 jeweils seitlich eine Durchflussöffnung 15 von der Einspeiseöffnung 4 zu der Durchleitungsöffnung 9 vorhanden ist. Das von der Dosiervorrichtung über den Einlauftrichter 3 in Richtung der Einspeiseöffnung 4 eingespeiste Material wird von dem dachähnlichen Leitelement 18 an den Öffnungen 14 der Düsen 5,19 vorbei und zu der Durchleitungsöffnung 9 geleitet. Dieses Material wird von dem unterhalb der Durchleitungsöffnung 9 angeordneten Auffangbehälter aufgefangen.

## Patentansprüche

1. Pneumatische Verteilmaschine mit einem Vorratsbehälter, Dosiereinrichtung, pneumatisch beaufschlagter und zu einem Verteilerkopf führender Förderleitung mit einem Einspeiseöffnung und Injektordüsen aufweisenden Injektor, wobei über die Einspeiseöffnung des Injektors das auszubringende Material von der Dosiereinrichtung in die Förderleitung eingespeist wird, wobei der Injektor in der der Einspeiseöffnung gegenüberliegenden Wandung eine von einem Verschlusselement abdeckbare Durchleitungsöffnung für das beim Abdrehvorgang dosierte Material aufweist, **dadurch gekennzeichnet, dass** oberhalb der Injektordüsen (5,6,19) für den Abdrehvorgang ein dachähnliches Leitelement (11,18) in dem Injektor (1,17) anordbar ist, und zwar derart, dass zwischen dem dachähnlichen Element (11,18) und den inneren Seitenwänden (15) des Injektors (1,17) zumindest eine Durchflussöffnung (16) von der Einspeiseöffnung (4) zu der Durchleitungsöffnung (9) vorhanden ist.

2. Verteilmaschine nach Anspruch 1, **dadurch gekennzeichnet, dass** das Leitelement (11,18) sich in Längsrichtung über die gesamte Einspeiseöffnung (4) des Injektors (1,17) erstreckt.

3. Verteilmaschine nach Anspruch 1, **dadurch gekennzeichnet, dass** das Leitelement (11) in Längsrichtung des Injektors (1) zwischen einer Abdeckstellung und einer Freigabestellung verschiebbar am oder im Injektor (1) angeordnet ist.

4. Verteilmaschine nach Anspruch 3, **dadurch gekennzeichnet, dass** das Leitelement (11) zwischen der Außenwandung des Injektors (1) und der Injektordüse (6) verschiebbar angeordnet ist.

5. Verteilmaschine nach Anspruch 1, **dadurch gekennzeichnet, dass** das Injektorgehäuse (20) und die Injektordüsen (5,19) einen kreisförmigen Querschnitt aufweisen, dass zumindest eine der Injektordüsen (19) um die Längsachse des Injektors (17) drehbar im Injektorgehäuse (20) angeordnet ist, dass an der drehbar angeordneten Injektordüse (19) das Leitelement (18) angeordnet ist.

6. Verteilmaschine nach Anspruch 1, **dadurch gekennzeichnet, dass** die Injektordüse (19) mit dem Leitelement (18) um etwa 180° zwischen einer Abdeckstellung und einer Freigabestellung verdrehbar ist, dass in der Abdeckstellung das Leitelement (18)sich im Bereich der Einspeiseöffnung (4) befindet und in der die Eingabeöffnung (4) freigebenden Freigabestellung die Durchleitungsöffnung (9) abdeckt.

7. Verteilmaschine nach einem oder mehreren der vorstehenden Ansprüche, **dadurch gekennzeichnet, dass** das Leitelement (11,18) mittels eines Verriegelungselementes (13,23) in der jeweiligen Stellung festsetzbar ist.
